(19) Europäisches Patentamt
European Patent Office
Office européen des brevets

(11) **EP 4 139 863 B1**

(12) **EUROPEAN PATENT SPECIFICATION**

(45) Date of publication and mention
of the grant of the patent:
**29.07.2026  Bulletin 2026/31**

(21) Application number: **21720854.5**

(22) Date of filing: **22.04.2021**

(51) International Patent Classification (IPC):
*G06Q 10/0635* (2023.01)    *G06Q 10/20* (2023.01)
*G06Q 10/0631* (2023.01)    *G06Q 30/018* (2023.01)
*G06Q 50/02* (2024.01)    *G06Q 50/04* (2012.01)
*G06Q 50/06* (2024.01)

(52) Cooperative Patent Classification (CPC):
**G06Q 10/0635; G06Q 10/06311; G06Q 10/06316;
G06Q 10/20; G06Q 30/018; G06Q 50/02;
G06Q 50/04; G06Q 50/06;** Y02P 90/80

(86) International application number:
**PCT/IB2021/053332**

(87) International publication number:
**WO 2021/214707 (28.10.2021 Gazette 2021/43)**

(54) **IMPROVED RISK BASED INSPECTION METHOD**

VERBESSERTES RISIKOBASIERTES INSPEKTIONSVERFAHREN

PROCÉDÉ D'INSPECTION AMÉLIORÉE SUR LA BASE DU RISQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.04.2020  NL 2025416**

(43) Date of publication of application:
**01.03.2023  Bulletin 2023/09**

(73) Proprietor: **Single Buoy Moorings Inc.
1723 Marly (CH)**

(72) Inventor: **MORTON, Stephen
98000 Monaco (MC)**

(74) Representative: **Arnold & Siedsma
Bezuidenhoutseweg 57
2594 AC The Hague (NL)**

(56) References cited:
WO-A1-2012/155194    WO-A1-2019/197830
WO-A2-01/80043    US-A1- 2014 358 601
US-B1- 9 672 486

**Description**

The present invention relates to a computer implement improved risk based inspection and repair method. Specifically, the invention relates to a computer implemented method for providing a repair priority parameter for equipment with a compromised integrity and a risk-based re-inspection parameter for processing devices in a processing plant, such as a hydrocarbon production plants.

Floating hydrocarbon production plants, also known as floating production, storage and offloading facilities (FPSOs), are typically floating vessels used by the offshore oil and gas industry for the production and processing of hydrocarbons, such as oil and gas. Such vessels are specifically designed to receive hydrocarbons from a nearby plant or from a subsea template, to process the hydrocarbons on board, and to store the hydrocarbons until the hydrocarbons can be offloaded onto a tanker or transported towards an onshore facility by means of a pipeline.

An advantage of FPSOs to fixed oil platforms are e.g. that they can be developed faster than fixed platforms and thereby can provide earlier cash flows. In addition, they can be moved to other platforms and as a result, they retain value and costs can be spread over several fields due to their re-deploy ability. Moreover, FPSOs are also efficient for smaller fields in which there is a high possibility to be depleted quickly. As a result, oil and gas companies can avoid the cost of installing permanent pipelines and the decommissioning process can be made easier and less costly in comparison with the traditional oil platforms.

However, in spite of their higher cost efficiency over fixed platforms, there is still a lot to gain in terms of profitability. Oil companies could lose significant production due to unplanned downtime, causing a significant loss of profits. Due to the asset-intensive nature of the industry, any small improvement in FPSO utilization can result in a large gain in revenue and cash flow. Therefore, keeping FPSOs running as long and as optimally efficient as possible with minimum failure is of crucial importance to improving profitability and maximizing returns on projects.

Special processes in the manufacture of equipment used in potentially hazardous environments, such as on FPSOs, ensure that the equipment does not pose an ignition risk. In essence, the equipment is manufactured to prevent overheating and/or the production of sparks having sufficient energy to ignite a surrounding hazardous environment. This equipment is certified for use and is marked as 'Ex' equipment. In the case of the oil and gas industry, a hazardous environment is generally an ignitable gas atmosphere resulting from primary loss of containment or from the process itself.

Certified Ex equipment is safe to install in potentially hazardous environments, providing the equipment is properly selected, erected and maintained and that it is regularly inspected to ensure that the original design parameters (method of protection) are intact and functioning. Ex equipment can be electrical, instrumentation or mechanical equipment. The equipment can be static or portable/transportable.

The processes of selection, installation, maintenance and inspection of Ex equipment are regulated. The most commonly recognized regulations are those issued by the International Electrotechnical Commission (IEC). In particular, the IEC60079 series of standards deals with electrical Ex equipment, whereas the ISO/IEC80079 series of standards deal with mechanical Ex equipment. These standards normally form part of the contractual documentation and obligations for any installation within a potentially hazardous environment.

In order to prevent repeated incidents, regulatory pressure is increasing to improve assurance of Ex equipment on industrial assets in the oil / gas sector, refineries, petrochemical plants and the mining industry. The scope of equipment included in the regulations is also increasing significantly, as regulators introduce requirements for the Ex inspection of mechanical and portable equipment.

Conventional inspection methods are inefficient and costly, leading to possible safety risks and inconsistencies in reporting. Even sophisticated operators have not yet developed effective Ex inspection systems to cope with these challenges. For instance, where an equipment fails an Ex inspection, the operator (user) of the equipment needs to understand the relative danger posed by continued use of that equipment. In the worst-case scenario, the equipment could pose an ignition risk when used in potentially hazardous environments. Usually, in the oil and gas industry, these risks pose a threat of ignition by the faulty equipment causing a spark (with sufficient energy to ignite a surrounding gas) or by the faulty equipment overheating (to the extent that the autoignition temperature of any surrounding gas is exceeded).

Some methods are known in the art, such as one relating to corrosion risk analysis of susceptible structures and more particularly relating to using accumulated data and experience to evaluate corrosion susceptibility and to prioritize for testing and/or maintenance of such structures from International Application WO 01/80043A2, and one relating to the field of computer assisted modelling of structures and to the filed of computer assisted scheduling of maintenance activities in relation to a structure from International Application WO 2012/155194A1 US2014/358601A1, WO2019/197830A1, US9672486B1 are further prior art.

It is a goal of the present invention, next to other goals, to provide an improved, more efficient and/or reliable repair method for processing devices in a processing plant, for instance a floating hydrocarbon production plant.

This goal, amongst other goals, is met by a method according to appended claim 1.

The method includes providing a repair priority parameter for a processing device in a processing plant, wherein the method comprises the steps of:

- providing, in a server, a criticality database, wherein the criticality database comprises for a plurality of processing devices in said processing plant at least one inspection routine , wherein each of the inspection routines has associated therewith a critically score;
- receiving in a server, from a user terminal, a result parameter associated with an inspection routine associated with said processing device, wherein the result parameter is indicative for a pass or a fail of said inspection routine;
- retrieving, if said received result parameter is indicative for a fail, from said criticality database the criticality score associated with said failed routine and said processing device; and
- defining said repair priority parameter for said processing device based on the retrieved criticality score.

Instead of filling in forms during an inspection routine, the method allows receiving a result parameter from the a user terminal, for instance a mobile phone, tablet or similar handheld device, wherein the method automatically calculates, preferably in a server or other processing unit, a repair priority parameter on the basis of the criticality score associated with the inspection routine in the criticality database, when an inspection failed. A more critical fault, thus having a higher criticality score than a less severe fault, then results in a higher repair priority parameter. Preferably, the inspection routine and preferably failures associated therewith are categorized, wherein each category is awarded a criticality score. A higher repair priority parameter may be indicative of the severity of a detected fault or failure of a processing device and may thus be indicative for the order of repair processes in a processing plant.

In use, the inspector uses the user terminal to input the result of the inspection. The input is preferably a pass or a fail. The user terminal will then send the result parameter to the server. Preferably, only when the result parameter is indicative for a fail, a repair priority is defined by said server. Otherwise, when processing devices passes the inspection, no repair is needed. Alternatively, for a passed inspection, a repair priority may be defined which indicates that no repair is needed.

In order to allow an efficient inspection process, while ensuring reliable results, it is preferred if the method further comprises, prior to the step of receiving the result parameter, the step of receiving in said server, from said user terminal, an identifier of a processing device. The processing device to be inspected is identified, such that the server can efficiently associate the respective results to the processing devices in the database.

Efficient identification can be obtained if the identifier comprises an RFID-tag associated with a processing device. The method preferably further comprises the step of scanning, with said user terminal, an RFID-tag associated with said processing device and sending said scanned RFID-tag to said server.

According to a further preferred embodiment, the method comprises retrieving, from said criticality database, at least one inspection routine associated with the processing device associated with said identifier and sending, to said user terminal, the retrieved inspection routine. Upon confirmation that the inspector is at the respective processing device, preferably by the identifier as mentioned above, an inspection routine is sent to the user terminal for display. The user terminal thus instructs the inspector which inspection routine to perform. Preferably, the user terminal also provides options for inputting the result parameter, for instance in the form of buttons (pass or fail). By using the button or other input means, the inspector can then indicate whether the processing device passes or fails the various inspection criteria. Upon receipt of the result parameter by the user terminal, the result parameter may be transferred to the server. The method thus preferably comprises receiving, in said user terminal, said result parameter associated with said inspection routine.

Ignition of potentially hazardous area substances (generally vapours, gasses or dusts) is related to the energy available at the fault location (faulty equipment) and the minimum ignition energy of the associated flammable material (vapour, gas etc.). Therefore, when considering ignition caused by sparking events in equipment, it is important to consider the normal operational voltage of the equipment under inspection. Therefore, the method preferably comprises defining said repair priority parameter also based on the operating voltage of the processing device. The method may include receiving, from the user terminal, the operating voltage of the processing device. More preferably, the operating voltages are categorized and awarded ignition risk scores, wherein higher voltages result in higher ignition risk scores.

Specifically, a further preferred embodiment further comprises the steps of:

- providing, in a server, an ignition risk database defining for the plurality of processing devices an ignition risk score, the ignition risk score being based on the operating voltage of the processing device;
- retrieving from said server, the corresponding the ignition risk score associated with said processing device, and;
- defining said repair priority parameter also on the basis of said retrieved ignition score.

It is then preferred if the method further comprises the steps of receiving, from the user terminal, an operating voltage of the processing device, wherein the ignition risk score is retrieved based on the received operating voltage. Preferably, a higher operating voltage results in a higher ignition score and thus higher repair priority parameter. Upon inspection, the user terminal may present to the inspector a checklist or numerical field for inserting the operating voltage. The results, preferably after confirmation, are then sent to the server.

Alternatively, the operating voltages are predefined. The ignition risk database may then comprise, for each processing device, an ignition risk score, which may be based on the operating voltage. Additionally or alternatively, the ignition risk database may contain, for at least two different operating voltages, an ignition risk score, wherein, upon receipt of an operating voltage, from for instance a user terminal, the ignition risk score is retrieved from said database. Preferably, the database contains at least two operating voltage ranges, more preferably a plurality thereof, wherein an ignition score is retrieved on the basis of a received operating voltage.

It is further preferred that processing devices being more exposed to hazardous substances are repaired with a higher priority. Each processing device thus preferably has associated therewith a hazardous zone score being indicative of the frequency and/or time that a hazardous substance may exist near said processing device in normal working conditions. Preferably, the scores are categorized in zones. A further preferred embodiment thus further comprises the steps of:

- providing, in a server, a hazardous zone database defining a plurality of zones and a hazardous zone score associated therewith, wherein the plurality of processing devices has associated therewith a hazardous zone and a corresponding hazardous zone score, wherein a zone is indicative of the frequency and time that a hazardous substance may exist in said zone in normal working conditions;
- retrieving, from said server, the zone score associated with said processing device, and;
- defining said repair priority parameter also on the basis of said retrieved hazardous zone score.

It may also be possible that the hazardous zone database directly defines for the plurality of processing devices a hazardous zone score, said score being indicative of the frequency and time that a hazardous substance may exist in the zone wherein the processing device is located in normal working conditions.

Within potentially hazardous environments, zones give an indication of the frequency of occurrence and time that a hazardous substance (vapour, gas etc.) may exist in normal operating conditions. A zone with longer presence of an explosive atmosphere in normal operation is awarded a higher hazardous zone score. As an example, in the oil and gas industry, zone times (the presence of an explosive gas atmosphere in normal operation) are as follows:-

- Non-hazardous location (0 hours = no hazardous atmosphere)
- Zone 2 (1-10 hours per year)
- Zone 1 (11-100 hours per year)
- Zone 0 (>101 hours per year).

An improved reliability of the repair priority parameter is obtained if the said score is also determined on the basis of a score associated with the location of the processing device. Preferably, the locations are categorized and each awarded a score. The primary location of installed equipment carries an inherent risk associated to the process of that location. For example, on an FPSO, a pump room contains pipework and valves for transferring crude oil to another vessel. During offload, there is a risk of loss of primary containment and, therefore, a risk that an explosive atmosphere could develop if the containment were to fail and hydrocarbons were to escape. In this example, the pump room is a high-risk primary location. A storage room is for instance a lower-risk primary location. A further preferred embodiment thus further comprises the steps of:

- providing, in a server, a primary location risk database defining a plurality of locations and a primary location score associated therewith, wherein the plurality of processing devices has associated therewith a location and a corresponding primary location score;
- retrieving, from said server, the corresponding primary location score associated with said processing device, and;
- defining said repair priority parameter also on the basis of said retrieved primary location score.

Sometimes primary locations that are relatively low risk have minor processes that can carry significant risk. An example of this is the engine room on an FPSO. The engine room is a non-hazardous location. However, within the engine room there may be a gas boiler and associated pipework. Where this pipework has flanged-connections, there is a risk of a gas leak. Any equipment located near to this flanged connection needs to be considered in terms of risk. Therefore, in order to capture this localized risk it is preferred to include the risks associated to the secondary location. Secondary location scores are preferably associated with the plurality of processing devices, wherein secondary location score is indicative of the risk of neighbouring equipment or process. Specifically, a more reliable repair priority can be thus obtained if the method further comprises the steps of:

- providing, in a server, a secondary location risk database defining for the plurality of processing devices a secondary location score being indicative of the risk of neighbouring equipment;
- retrieving, from said server, the corresponding secondary location score associated with said processing device, and;

- defining said repair priority parameter also on the basis of said retrieved secondary location score.

It is preferred if the repair priority parameter is defined on the basis of the critically score, ignition risk score, hazardous zone score, the primary location score and the secondary location score as mentioned above. In the alternative, the repair priority is based on a selection of these scores.

Preferably, the respective databases are stored in the same server, for instance the same server or processing unit for defining the repair priority. The server, or servers, may be located in said processing plant. This is in particular advantageous when the processing plant is a floating hydrocarbon production plant. The databases may also be stored as least partly on the user terminal. Also the user terminal may function as a server for defining the repair priority parameter. The processing plant is then preferably providing with a communication unit for communicating with the at least one user terminal. The communication unit may provide a wireless network to which the user terminal may be connected wirelessly.

According to a further preferred embodiment, the criticality database comprises for a plurality of processing devices a plurality of inspection routines, wherein each of the inspection routines has associated therewith a criticality score. For one processing device, multiple inspection routines are thus available. It is preferred if the inspection routines comprise the inspection tasks as defined in IEC60079-17 or a similar norm.

It may be the case that all inspection routines need to be performed on an inspection. This is however not always needed, as will be explained in greater detail below. Moreover, it is preferred if the different inspection routines are categorized in terms of inspection depth, for instance only a visual or close grade inspections where the processing device can remain closed and detailed inspection, requiring for instance opening, isolation and/or override and at least partly disassembling the processing device.

Therefore, preferably each of the inspection routines has associated therewith an inspection grade parameter, wherein the inspection grade parameter is indicative for the depth of the inspection routine, wherein a higher inspection grade parameter reflects a greater depth of inspection. It is then preferred if a plurality of the processing devices has associated therewith a plurality of inspection routines with different inspection grade parameters. For one processing device, at least two, preferably three, ways (grades) of inspection are then preferably available.

According to a further aspect, the method comprises providing a risk database, wherein the risk database comprises a plurality of risk based inspection parameters associated with a plurality of processing devices, wherein the risk based inspection parameter is indicative of the failure risk of a processing device. The plurality of processing devices thus has associated therewith a risk parameter, which is indicative of the potential consequences of a failure.

Preferably, the risk based inspection parameter is defined on at least one equipment parameter being indicative of the likely consequence of a failure and/or likelihood of malfunction of said processing device. The equipment parameter may correspond to the criticality score, ignition risk score, hazardous zone score, the primary location score and/or the secondary location score as mentioned above. It may also be possible that the risk based inspection parameter is based on historical failures of inspections and/or historical loss of primary containment in the nearby process.

It is preferred if an equipment parameter defines at least two categories, wherein each category has associated therewith a risk score, wherein the risk based inspection parameter is determined on the basis of the combined risk scores of the respective equipment parameters. Several aspects can then be taken into account when determining the risk parameter.

The risk based inspection parameter may be based on a hazardous zone parameter as described above. Zones more and longer exposed to hazardous substances are awarded a higher score, thus increased risk.

The risk based inspection parameter may be based on an environmental parameter being indicative of the exposure to the environment, i.e. weather, deluge or sea spray, of the equipment. More exposure to the environment results in a higher score. A lower scored category may include processing devices inside dry controlled environment wherein external damage is unlikely. Medium risk category may include processing devices inside and/or protected, but outside. High risk category may include processing devices exposed to weather, deluge or sea spray.

The risk based inspection parameter may be based on a corrosion risk parameter being indicative of the risk of corrosion of said processing device. A lower scored category may include processing devices with light surface corrosion and/or no chemical reaction. Medium risk category may include processing devices wherein the coating is degraded with scale forming and/or with some chemical reaction. High risk category may include processing devices with delaminating of base metal, coating ineffective and/or chemical reaction

The risk based inspection parameter may also be based on a water exposure parameter being indicative of the exposure to water of the processing device. A lower scored category may include processing devices which are inside and dry. Medium risk category may include processing devices which are outside (exposed to rain only). High risk category may include processing devices which are outside (exposed to sea water and rain) and/or deluge areas

The risk based inspection parameter may be based on an opening frequency parameter being indicative of the opening frequency of the processing device. A lower scored category may include processing devices which are not opened, medium risk category may include processing devices opened irregularly and high risk category may include processing devices which are opened frequently.

The risk based inspection parameter may be based on an ignition risk parameter being indicative of the operating voltage of the processing device, for as defined above. Processing devices operating at low-voltage under the protection of an intrinsically-safe system are for instance categorized as a lower risk.

The risk based inspection parameter may be based on an equipment protection parameter being indicative of protection concept of the processing device. A lower scored category may include processing devices protected under Exm/Exq/Exo/Exi/Exs/ExC concepts. Medium risk category may include processing devices protected under Exd/Exp concepts. High risk category may include processing devices protected under Exe/ExN concepts.

The risk based inspection parameter may be based on a vibration parameter being indicative of the exposure to vibration of said processing device. A lower scored category may include processing devices secured to main structure/low vibration location. Medium risk category may include processing devices including rotating parts, and/or actuated valves. High risk category may include processing devices including turbines and/or reciprocating engines.

The risk based inspection parameter may be based on an UV exposure parameter being indicative of the exposure to UV light of said processing device. A lower scored category may include inside processing devices. Medium risk category may include processing devices located outside under a cover. High risk category may include processing devices outside (exposed to direct sunlight).

The risk based inspection parameter may be based on a temperature parameter being indicative of the range of temperature exposed to said processing device. A lower scored category may include processing devices exposed to temperatures between -20 °C and 40°C. High risk category may include processing devices exposure to temperatures less than -20 °C or greater than 40°C.

The risk based inspection parameter may be based on a location parameter being indicative of the conditions of the location of the processing device. A lower scored category may include processing devices located in water injection, water treatment, SRP module (water process), internal accommodation areas, and externally mounted equipment on accommodation walls. Medium risk category may include processing devices located in separation trains, separators, treater, pumps, well service pump, chemical injection skid, flare system, flare drums, flare stack, fuel gas system, utilities, power generation, LER, forward electrical rooms, laboratory, lay-down areas, cranes, helideck, main deck, pipe -racks. High risk category include processing devices located in turret, moon pool, pump room, pump room ventilation exhaust area, topside zone 1, high-pressure gas systems - compressors, cargo systems.

As mentioned above, each of the inspection routines has preferably associated therewith an inspection grade parameter, wherein the inspection grade parameter is indicative for the depth of the inspection routine. It is then preferred if the inspection routine to be used by the inspector is based on the risk based inspection parameter. Processing devices having associated therewith higher risk based inspection parameters, may require a more in-depth inspection and vice versa. Therefore, according to a preferred embodiment, the step of retrieving the at least one inspection routine, preferably for transfer to the user terminal, comprises selecting an inspection routine on the basis of the risk based inspection parameter associated with a processing device, wherein for a higher risk base inspection parameter, an inspection routine having a higher inspection grade parameter is selected.

As an example, the IEC 60079 series of standards recommends regular three-yearly inspections of all Ex certified equipment as a minimum. However, as the risk posed by each processing device can vary significantly, the method preferably comprises the step of determining, on the basis of the risk based inspection parameter, an inspection interval for the respective processing devices. The method further preferably comprises the step of defining, on the basis of the risk based inspection parameter for a processing device, an inspection interval, wherein an inspection interval for a higher risk based inspection parameter is shorter than for a lower risk based inspection parameter. For processing devices having a high risk based inspection parameter, the inspection interval may for instance be six months or 24 months instead of the 36 months period recommended by the standards. For lower risk processing devices, an inspection frequency of 48 or 60 months may be more appropriate.

To efficiently calculate the next required inspection, it is preferred if the method also includes a step of recording, in a history database, the inspection dates of the respective processing devices. Upon inspection, for instance upon receipt of a result parameter as mentioned above, the inspection date is stored for the respective processing device. Preferably, the method comprises providing, on the basis of the defined inspection interval and the inspection dates of the processing devices, an inspection order list defining the processing devices to be inspected. The inspection order list can be used by an inspector to inspect the respective processing devices.

It is preferred if the method further comprises the steps of providing to a user terminal the inspection order list and the selected inspection routines. The user terminal then receives a list of processing devices which need to be inspected, while also the inspection grade (visual, close or detailed) is preferably defined. This ensures that all equipment is regularly inspected in the correct way.

Preferably the method comprises a step of providing to the user, preferably on the user terminal, at least one identification of a processing unit selected from the inspection order list. The user then receives input which device needs to be inspected. Preferably, also the inspection routine is provided to the user. The inspection routine may be retrieved from the server as mentioned above upon identification of the processing device or may already be available in the user terminal. The method may then comprise a step of retrieving, from the criticality database, the respective inspection routines associated with the respective processing devices on the inspection order list. Preferably, the inspection routines are selected on the basis of the risk based inspection parameter of the respective processing device. The inspection order list may then comprise a list of processing devices to be inspected, including the inspection routines to be used for each of these processing devices. Upon inspection of the devices, including preferably the identification step as described above, the result parameters may then be transferred to the server as mentioned above. Alternatively, the results parameter(s) may be stored at least temporary on the user terminal for later transfer.

A repair priority as defined above is used to plan repair works in a processing plant. A method is thus provided for defining a repair priority list for at plurality of processing devices in a processing plant, wherein the method comprises the steps of:

- defining for a plurality of processing devices a repair priority parameter, and;
- providing a repair priority list on the basis of the defined plurality of repair priority parameters for each of the processing devices.

A method is provided for repairing a plurality of processing devices in a processing plant on the basis of the repair priority list obtained by the method as described above.

According to a further aspect, a system is provided for providing a repair priority parameter as described above. Such a system may comprise a server and processing means to perform the method steps as described above. The system is preferably arranged to communicate, for instance through a network formed by a communication unit, with at least one user terminal, for instance a tablet, laptop, mobile phone or other mobile unit, for receiving the result parameters and possibly to transmit the respective inspection routines or inspection order list. Preferably, the system includes such a user terminal, wherein the user terminal preferably comprises a RFID-scanner for scanning an RFID-tag of a processing device as mentioned above.

According to a further aspect a processing plant, preferably a floating hydrocarbon production plant, with such a system is provided.

The present invention is further illustrated by the following Figures, which show a preferred embodiment of the method according to the invention, and are not intended to limit the scope of the invention in any way, wherein:

- figure 1 shows a top view of a preferred embodiment of the floating hydrocarbon production plant;

- figure 2 shows a close-up view of a preferred embodiment of the plant server system of the plant of figure 1;

- figure 3 shows a schematic view of a processing structure;

- figure 4 schematically shows the process of defining a repair priority list;

- figures 5a and b show examples of tables;

- figure 6 schematically shows a more detailed process of defining a repair priority list;

- figures 7A and B schematically shows a hazardous zone table and the risk database.

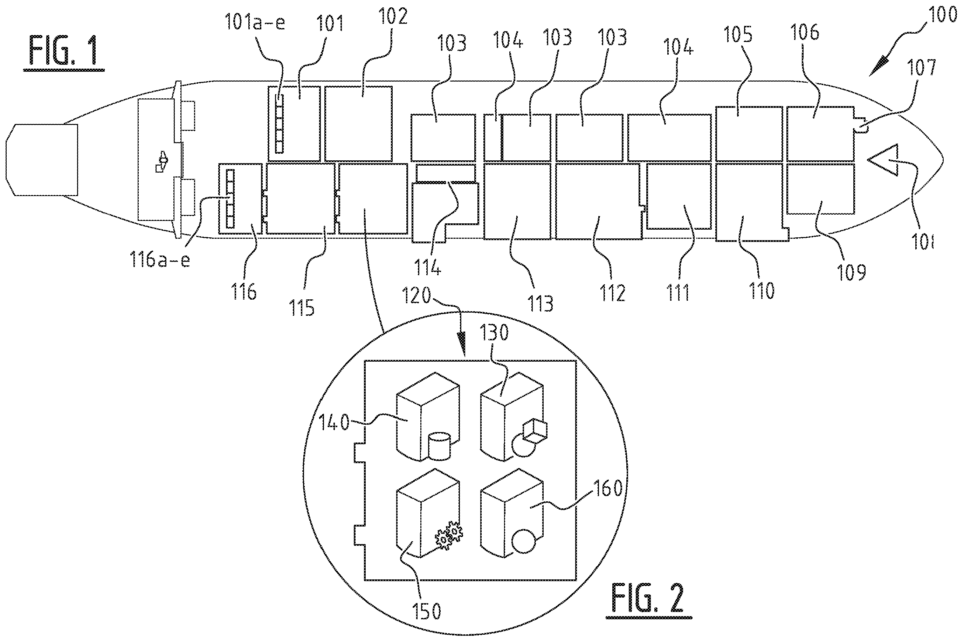

Figure 1 shows a schematic top view of a floating hydrocarbon production plant or FPSO 100, comprising several processing structures 101 to 116 which consist of several sub-components, also referred to as processing devices, which are pieces of hydrocarbon processing equipment. A plurality of processing devices 101a-e is for instance provided in association with the processing structure 101. Similarly, processing devices 101a-e to 116a-e are processing devices associated with different processing structures which are typically located in different location or zones in the FPSO 100.

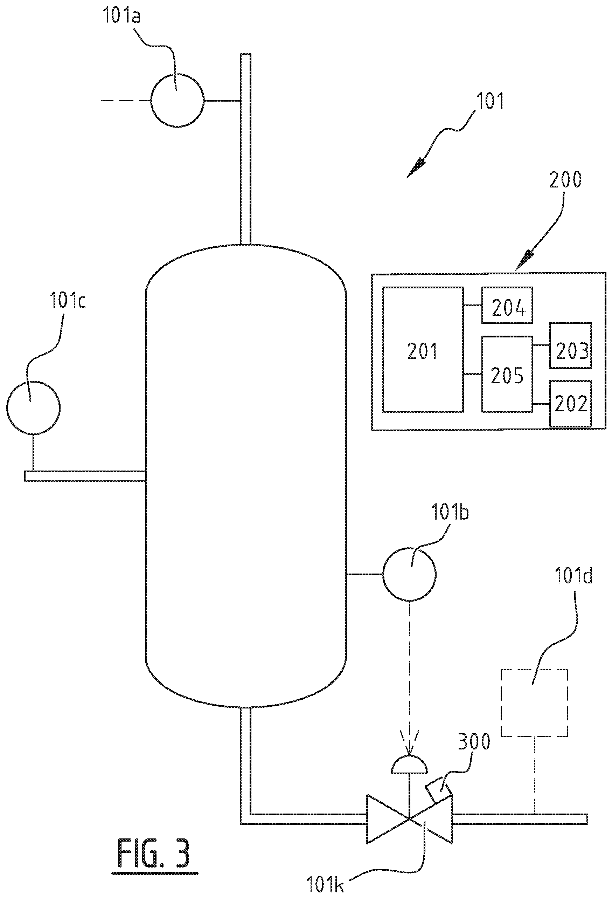

As examples of processing structures, the floating hydrocarbon production plant 100 comprises a filter structure 101 (see also figure 3), a sea water treatment structure 102, multiple oil processing structures 103, multiple gas treatment structures 104, an injection gas compression structure 105, a flare knockout drum structure 106, a vent stack structure 107, flare stack structure 108, a main gas compression structure 109, a $H_2S$ removal structure 110, a $CO_2$ membrane structure 111, a $CO_2$ gas compression structure 112, a main gas compression structure 113, a laydown area/chemical injection structure 114, multiple power generation structures 115, and an oil metering offloading skid structure 116. Each of these structures or zones 101 to 116 has respective processing devices 101a-e to 116a-e associated therewith. The processing devices may be electrical, instrumentation or mechanical equipment and may also include sensors. For instance, a sensor 101a associated with a filter structure 101 (see figure 3) measures a pressure and temperature of the inflow, while a sensor 101d may measure the outflow. A valve 101k, coupled to sensor 101b as indicated with the arrow, may control the outflow.

As shown in figure 2, the floating hydrocarbon production plant 100 further comprises a plant server system 120, including storage 140, a processing unit 150 for processing data, an external interface server 130 for connecting the storage 140 and/or processing unit 150 to external servers, such as onshore servers or servers located in other processing plants. The plant server system further comprises a communication server 160 arranged to receive, from a user terminal 200, inspection results as will be discussed in greater detail below.

The processing devices or equipment in processing plants such as an FPSO is manufactured to prevent overheating and/or the production of sparks having sufficient energy to ignite a surrounding hazardous environment. This equipment is certified for use and is marked as 'Ex' equipment. This equipment needs to be regularly inspected to ensure that the original design parameters (method of protection) are intact and functioning.

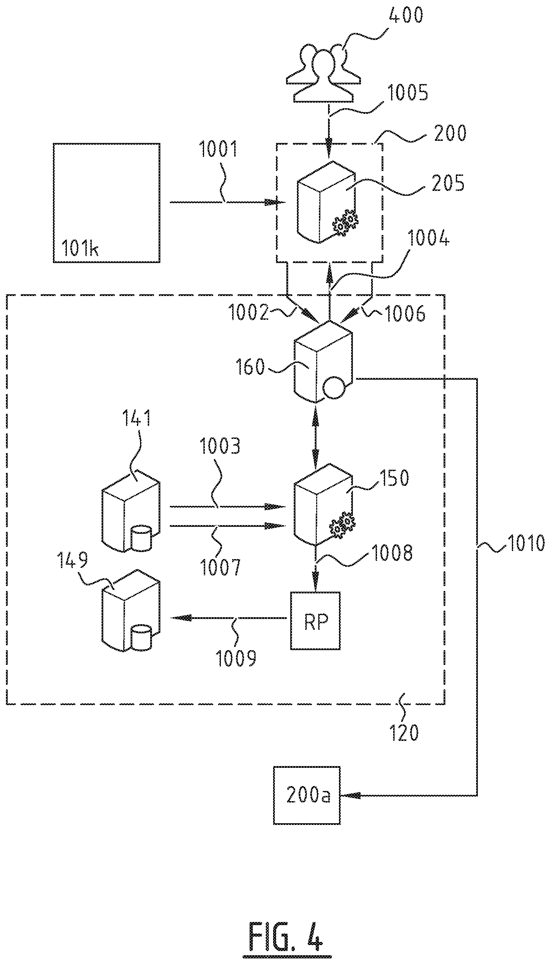

For efficiently inspecting the equipment in the processing plant, a user terminal 200 (see figures 3 and 4) is provided. The user terminal 200 may be a mobile unit in the form of a mobile phone, tablet or portable computer (laptop) and is provided with an output 201 in the form of for instance a screen 201, input 204 in the form of for instance a keyboard or touch screen, wireless communication module 203, for instance in the form of a Wi-Fi or other wireless network adapter to communicate with the communication server 160 of the plant server 120. A central processing unit 205, also including storage, is further provided. The user terminal 200 is further provided with a RFID module 202, which allows reading RFID tags 300 (see figure 3) associated with equipment, in this example valve 101k.

When processing device 101k is to be inspected, a user 400 uses the user terminal 200 to scan the RDIF tag 300 associated with the processing device 101k. Other identifiers for processing device may also be used. The user 400 may for instance input, for instance by scanning, a serial number of the processing device 101k. The step of providing the identifier to the user terminal 200 is schematically indicated with arrow 1001 in figure 4. Upon receipt of the identifier, the user terminal 200 sends, for instance via a wireless network, the identifier to the plant server 120, where it is for instance received in communication server 160 (step 1002). The communication server 160 is operably coupled to processing unit 150, which is also coupled to storage 140 (see also figure 2).

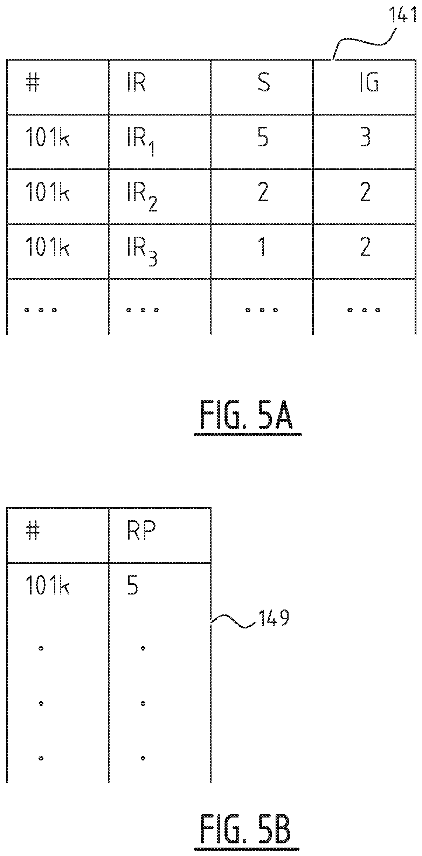

The storage 140 contains a criticality database 141 comprising for a plurality of processing devices at least one inspection routine, wherein each of the inspection routines has associated therewith a critically score. This database 141 is schematically shown in figure 5A and contains for processing device 101k in this example three inspection routines $IR_{1-3}$. References to the processing device 101k in the database may be done by including for instance the identifier in the table 141. Also associated with each inspection routine $IR_{1-3}$ are scores S, in this example 5, 2 and 1, respectively. As an alternative, inspection routines $IR_{1-3}$ may be associated with classes or groups of processing devices, for instance based upon the equipment protection method/concept of protection.

The inspection routines define routines which the user 400 can perform for inspecting the device 101k. These are taken directly from the inspection tables in the IEC60079-17 standard. Also provided in the table 141 are inspection grade parameters IG associated with the respective routines. As will be explained in greater detail below, the inspection grade parameter is indicative for the depth of the inspection routine $IR_{1-3}$.

Thus upon receipt of the identifier in the server 120 (step 1002), the processing unit 150 retrieves (step 1003) from the criticality database 141 one inspection routine $IR_1$ and sends this inspection routine $IR_1$ to the user terminal 200 (step 1004). The inspection routine $IR_1$ may for instance contain instructions to the user 400 to be displayed on the screen 201.

The user terminal 200 is arranged to receive an input from the user 400, wherein the input is indicative for a pass or a fail of said inspection routine. The input, as result parameter, is provided to the server 120 (step 1006) and when the result parameter is indicative of a fail of the inspection routine $IR_1$, the processing unit 150 retrieves (step 1007), from the criticality database 141, the score S associated with the failed inspection routine $IR_1$, in this example 5. The score S reflects the severity of the detected malfunction of the device 101k.

In a next step 1008, a repair priority parameter RP for said processing device 101k is defined, based on the retrieved criticality score S. In this simplified example, the repair priority is based on the criticality score S only and is thus 5. The repair priority P is stored (step 1009) in a repair priority list 147. The list 147 defines for a plurality of devices the report priority RP. Sorting this list 147 based on repair priority, gives an indication of the order of maintenance. The repair priority list 147 may for instance be transferred to a user terminal 200a of a maintenance engineer (step 1010), which may use said list 147 to repair the plurality of processing devices in a processing plant. Processing devices having a higher repair priority may then be repaired first.

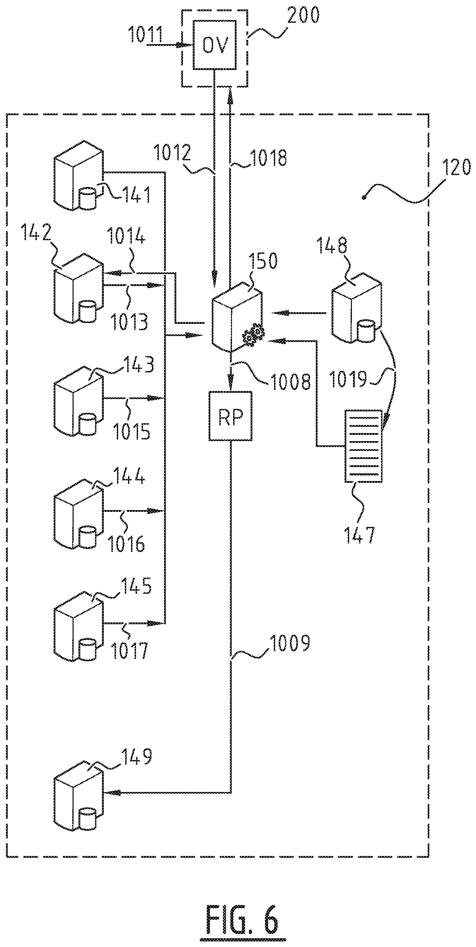

In the above example, the repair priority RP is only defined on the basis of the criticality score S. With reference to figure 6, which corresponds to the configuration as shown in figure 4, it is however preferred if the processing unit 150 is arranged to determine the repair priority RP (step 1008) on the basis of an ignition risk score as stored in a ignition risk database 142, a hazardous zone score as stored in a hazardous zone database 143 and primary and secondary location scores stored in a primary, respectively secondary location risk databases 144, 145.

The ignition risk database 142 defines for the plurality of processing devices an ignition risk score, the ignition risk score being based on the operating voltage of the processing device. An example of such a database is included further below as Table 2. The user terminal 200 may present to the user 400 an input field or choice on the display 201 which allows the user 400 to input (step 1011) the operating voltage OV of the processing device 101k. In a similar way as shown in figure 4, the operating voltage OV is transmitted (step 1012) to the server 120.

The processing unit 150 then retrieves (step 1013) from said server 142, the corresponding ignition risk score associated with operating voltage OV (step 1014) and defines (step 1008) said repair priority parameter RP also on the basis of said retrieved ignition score.

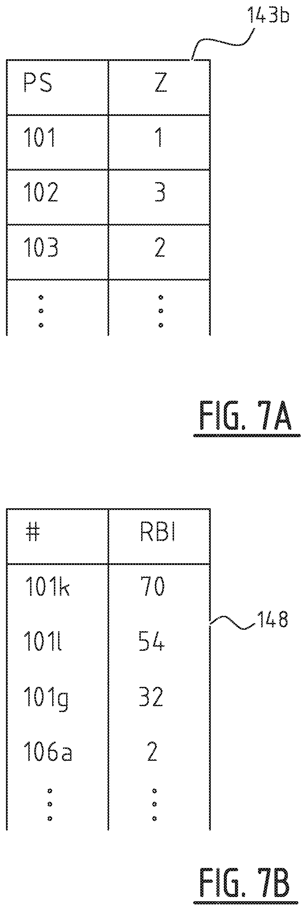

The hazardous zone database 143, as will be explained further below, defines a plurality of zones and a hazardous zone score associated therewith (see Table 3 below). The processing structures 101 to 116 (figure 1) may each have associated therewith a different zone, see for instance the table 143b in figure 7A, wherein the column PS defines the processing structures and the column Z the respective zones Z. The score for a respective processing structure may then be retrieved from the hazardous zone database 143. The processing unit 150 is also arranged to retrieve (step 1015), from said server 143, the zone score associated with said processing device 101k, and to define (step 1008) said repair priority parameter RP also on the basis of said retrieved hazardous zone score.

Also provided is a primary location risk database 144 defining a plurality of locations and a primary location score associated therewith and a secondary location risk database 145 defining for the plurality of processing devices a secondary location score. The contents of these databases will be explained in more detail below. The processing unit 150 is also arranged to retrieve (steps 1016 and 1017), from said servers 144, 145 the primary and secondary location scores associated with said processing device 101k, and to define (step 1008) said repair priority parameter RP also on the basis of said retrieved scores.

In the process as shown in figure 4, inspection results as received by a user terminal 200 triggers the calculation of a repair priority RP. That is, only when a result parameter of an inspection routine is received which indicates that the inspection failed, a corresponding repair priority RP is defined. All processing devices failing the inspections are then included in the inspection list 147, having a repair priority associated therewith.

Typically, inspection of a processing device is required every 36 months. The processing unit 150 may thereto send to the user terminal 200 (step 118) a list 147 of processing devices which require inspection. The list 147 may be displayed on the user terminal 200 and guide the inspector to the respective processing devices. It is preferred if also the inspection process in prioritized.

The plant server 120 thereto comprises a risk database 148, wherein the risk database comprises a plurality of risk based inspection parameters associated with a plurality of processing devices, wherein the risk based inspection parameter is indicative of the likely consequence of a failure of a processing device. As will be explained in greater detail below, the risk based inspection parameter RBI (see figure 7B) may be based on the parameters as defined in Table 6. The risk database 148 thus comprises for the plurality of processing devices (column indicated with # in figure 7B), a risk based inspection parameter RBI. The inspection list 147 may be defined (step 1019) based on the determined risk based inspection parameters RBI.

As mentioned above, the criticality database 141 (see figure 5A) also contains inspection grade parameters IG associated with the respective routines. The inspection grade parameter IG is indicative for the depth of the inspection routine $IR_{1-3}$. The processing unit 150 is then arranged to retrieve the at least one inspection routine (step 1003 in figure 4) on the basis of the risk based inspection parameter RBI associated with a processing device. Processing devices having higher risk based inspection parameters may for instance require a more in-depth inspection.

The step of providing the list 149 (step 1019) may also include defining on the basis of the risk based inspection parameter for a processing device an inspection interval, wherein an inspection interval for a higher risk based inspection parameter is shorter than for a lower risk based inspection parameter. The storage 140 (see figure 1) then preferably comprises a history database, where the inspection dates of the respective processing devices are stored. Based on the last inspection date and the inspection interval, the inspection list 147 may then be defined (step 1019). This list 147 may be provided to the user terminal 200, perhaps together with the selected user routines $R_{1-3}$ based on the risk based inspection parameters RBI for the respective processing devices.

The list 147 may thus contain the work order of the inspector and directs the inspector to the processing devices to the inspected. The list may contain the processing devices to be inspected. Upon identification (step 1001) of the respective processing device 101k on the list 147, the selected inspection routine $R_{1-3}$ may be presented to the user terminal 200. Alternatively, the selected routines $R_{1-3}$ are already provided to the user terminal 200, together with the inspection list 147. On the basis of the results of the inspection of the respective processing devices, a repair priority list 149 may be defined (step 1009).

As mentioned above, the repair priority RP is based on information form the databases 141 - 145 and the processing unit 150, or any other component, defines the repair priority parameter RP based upon:

$$RP = C + IR + Z + L + SL:$$

wherein:

C is the critically of the fault, i.e. the criticality score;
IR is the ignition risk score;
Z is the hazardous zone score;
L is the primary location score;
SL is the secondary location score.

The respective scores will be explained in further detail below.

Criticality score (C).

As mentioned above, a criticality database 141, wherein the criticality database comprises for a plurality of processing devices in said processing plant at least one inspection routine, wherein each of the inspection routines has associated therewith a critically score. In the example below, this is associated to the fault code defined by the particular IEC60079-17 inspection task. Table 1 shows an example of a part of the criticality database:

Table 1

| Type | Visual | Closed | Detailed | Description | Catagory Name | Fault Points | Spares ref | Original fault security level | Reviewed value |
|------|--------|--------|----------|-------------|---------------|--------------|------------|-------------------------------|----------------|
| AO1 | 1 | 1 | 1 | Equipment is appropriate to the EL/-Zone requirements of the location | A-apparatus | 3 | Engineering | High | High |
| AO2 | 0 | 1 | 1 | Equipment group is correct | A-apparatus | 3 | Engineering | High | High |
| AO3 | 0 | 1 | 1 | Equipment temperature class is correct (only for gas) | A-apparatus | 3 | Engineering | High | High |
| AO5 | 1 | 1 | 1 | Degree of protection (IP grade) of equipment is appropriate for the level of protection/group/c onductivity | A-apparatus | 2 | Engineering | Medium | Medium |
| AO6 | 0 | 0 | 1 | Equipment circuit identification is correct | A-apparatus | 2 | Investigation | Low | Medium |
| AO7 | 1 | 1 | 1 | Equipment circuit identification is available | A-apparatus | 2 | Investigation | Low | Medium |

The criticality database comprises for the equipment in the processing plant at least one inspection routine (column "Description"). In this example, the tasks correspond to the inspection tasks as defined in IEC 60079-17. Each of the routines or tasks has associated therewith a critically score (fault points in the table above). In this example, each fault code has been considered, and given a 'high'(3), 'medium' (2) or 'low' (1) criticality score within the configuration. The scores for each inspection task are continually monitored and reviewed. Preferably, the scores are updated based upon 'lessons-leaned' from for instance other processing plants which are similar to the current processing plant.

Also included in the criticality database are inspection grade parameters which define the depth of the inspection routine. In this example, it is defined for each of the tasks whether it is a visual, close or detailed inspection task (see the respective columns). A detailed inspection may be representative of a higher inspection grade parameter.

Ignition risk score (IR).

Ignition of potentially hazardous area substances (generally vapours, gasses or dusts) is related to the energy available at the fault location (faulty equipment) and the minimum ignition energy of the associated flammable material (vapour, gas etc.). Therefore, when considering ignition caused by sparking events in equipment, it is important to consider the normal operational voltage of the equipment under inspection. Generally, the higher the operating voltage of the equipment, the higher the potential fault energy available and thus the higher the ignition risk score. In this regard, the normal operational voltage of the equipment is for instance considered as listed in Table 2:

Table 2

| | Category | Strategy Points |
|---|---|---|
| 2. Ignition Risk (applied to type of equipment) | High Risk - HV/LV Power Circuits / Comm's & Instr. (>50V) | 3 |
| | Low Risk - Non-Hazardous | 1 |
| | Low Risk - IS (intrinsic safe) | 1 |
| | Medium Risk - Instrumentation & Fire & Gas (<50V) | 2 |

Hazardous zone score (Z).

Within potentially hazardous environments, zones give an indication of the frequency of occurrence and time that a hazardous substance (vapour, gas etc.) may exist in normal operating conditions. As an example, the zones are defined on the basis of a period of time wherein the presence of an explosive atmosphere in normal operation is likely. Effectively, zones are based upon the anticipated time a hazardous environment is likely to exist. For gas/vapour environments, those times are as follows:

- Non-hazardous location (0 hours = no hazardous atmosphere)
- Zone 2 (1-10 hours per year)
- Zone 1 (11-100 hours per year)
- Zone 0 (>101 hours per year)

The hazardous zone score associated with the zones are listed in Table 3:

Table 3

| | Category | Score |
|---|---|---|
| 3. Hazardous Area List (applied to the hazardous are where the equipment is located) | Safe Areafigure | 0 |
| | Zone 0 | 3 |
| | Zone 1 | 2 |
| | Zone 2 | 1 |

Primary location score (L).

The primary location of installed equipment carries an inherent risk associated to the process of that location. For example, on an FPSO, a pump room contains pipework and valves for transferring crude oil to another vessel. During offload, there is a risk of loss of primary containment and, therefore, a risk that an explosive atmosphere could develop if the containment were to fail and hydrocarbons were to escape. A pump room is for instance a high-risk primary location. The fact that a pump room is zone 1 is irrelevant. Consideration is for the process, not the zone. A primary location risk database therefore defines a plurality of locations and a primary location score associated therewith

Another example would be to consider two zone 2 locations on an FPSO, namely a lay-down area and a high-pressure gas pump. Both locations are hazardous zone 2 (see above, an area in which an explosive gas atmosphere is not likely to occur in normal operation but, if it does occur, it will exist for a short period only - normally 1-10 hours per year). The significant difference however, is when the process in each location is considered. The lay-down area is a simple storage area for materials. Those materials are unlikely to carry hydrocarbons and, even in the event of damage, are unlikely to allow the release of gas. In this example, the high-pressure pump is installed in a zone 2 location. However, the process associated with this equipment lends itself to a possible breach of containment and a consequential gas release. Additionally, these types of pump are frequently installed in groups - thereby increasing the risk.

Therefore, in this example, the pump primary location is considered as a high-risk and the lay down location is considered as medium risk. Allocation of primary area risk is subject to an understanding of the process for each facility and therefore, differs from one facility to another and one FPSO to another. For each facility, a survey needs to be carried out in order to establish primary location risk. Following this survey, the primary location scores (L) may be high (3), medium (2) or low (1).

Secondary location score (SL).

Sometimes primary locations that are relatively low risk have minor processes that can carry significant risk. An example of this is the engine room on an FPSO. The engine room is a non-hazardous location. However, within the engine room there may be a gas boiler and associated pipework. Where this pipework has flanged-connections, there is a risk of a gas leak. Any equipment located near to this flanged connection needs to be considered in terms of risk.

In order to capture this localized risk, the system is configured to include the risks associated to the secondary location by using a secondary location score being indicative of the risk of neighbouring equipment, awarding score from 3 (high) to 1 (low). Based upon the calculated repair priority parameter, a fault priority can be determined, for instance based on the configuration table listed below as Table 4:

Table 4

| | Description | Fault Priority | Total Points Risk Low | Total Points Risk High |
|---|---|---|---|---|
| 6. Fault Priority Assesment Table | Repair Priority 0 | RP 0 | 15 | 100 |
| | Repair Priority 1 | RP 1 | 14 | 14 |
| | Repair Priority 2 | RP 2 | 12 | 13 |
| | Repair Priority 3 | RP 3 | 7 | 11 |
| | Repair Priority 4 | RP 4 | 5 | 6 |
| | Repair Priority 5 and above | RP 5&6 | 0 | 4 |

The fault priority may then be used to define a time frame and possible further actions, for instance as defined in Table 5:

Table 5

| Priority level | Action | Maximum recommended time frame | Mitigation measures required? |
|---|---|---|---|
| 0 | **Essential: Immediate** action required. Replacement parts to be ordered IMMEDIATELY and temporary protection or isolation of equipment is necessary. Risk-assessment MUST me carried out prior to continued use of the equipment | Immediate | Definitely? |

(continued)

| Priority level | Action | Maximum recommended time frame | Mitigation measures required? |
|---|---|---|---|
| 1 | **Very High Priority:** **Very Urgent** action required. Replacement parts to be ordered ASAP and temporary protection or isolation of equipment may be necessary. Risk-assessment to be carried out prior to continued use of the equipment. | 30 x days | Yes |
| 2 | **High Priority:** **Urgent** action required. Replacement parts to be ordered ASAP and temporary protection or isolation of equipment may be considered. Risk-assessment may be required prior to continued use of the equipment. | 60 x days | Possibly |
| 3 | **Medium Priority:** **Corrective** action required. Replacement parts to be ordered ASAP. Risk-assessment may be considered prior to continued use of the equipment. | 120 x days | Possibly |
| 4 | **Low Priority:** **Corrective** action required. Replacement parts to be ordered ASAP. | 240 x days | Unlikely |
| 5 and above | **Very Low Priority: Corrective** action required. Replacement parts to be | 480 x days | No |
| | ordered ASAP. | | |

According to a further aspect, a risk based inspection parameter is defined. The IEC 60079 series of standards recommends regular three-yearly inspections of all Ex certified equipment as a minimum. However, as the risk posed by each device can vary significantly, a risk-based re-inspection date and grade (Grade = 'how' the inspection is performed - visual/close or detailed grades are available) is suggested based upon Table 6:

Table 6

| 1. Equipment Zone | Category | Strategy Points | Notes |
|---|---|---|---|
| | Non-Hazardous | 1 | |
| | Zone 2 | 1 | |
| | Zone 1 | 5 | |
| | Zone 0 | 10 | |
| 2. Environmental Category | Category | Strategy Points | Notes |
| | Benign | 1 | Inside dry controlled environment, External damage unlikely |
| | Moderate | 2 | Inside/protected, Near lay down area but protected |
| | Severe | 3 | Exposed to weather, deluge or sea spay. Near lay down area |
| 3. Corrosion Risk | Category | Strategy Points | Notes |
| | Low | 0 | Light surface corrosion. No chemical reaction |
| | Medium | 0 | Coating degraded with scale forming. Some chemical reaction |
| | High | 0 | Delaminating of base metal, coating ineffective, Chemical |
| | | | reaction |

| 4. Water Exposure | Category | Strategy Points | Notes |
|---|---|---|---|
| | Benign | 1 | Inside, Dry |
| | Moderate | 5 | Outside (exposed to rain only) |
| | Severe | 10 | Outside (exposed to sea water and rain)/Deluge areas |

| 5. Frequently Opened | Category | Strategy Points | Notes |
|---|---|---|---|
| | No | 0 | No |
| | Yes | 200 | Yes |

| 6. Equipment Voltage (Ignition Risk) | Category | Strategy Points | Notes |
|---|---|---|---|
| | Low - IS | 1 | Low Risk - IS Systems |
| | Low - NH | 1 | Low Risk - Non-Hazardous |
| | Medium | 5 | Medium Risk - Instrumentation & Fire & Gas (<50V) |
| | High | 15 | High Risk - HV/LV Power Circuits / Comm's & Instr. (>50V) |

| 7. Equipment Protection Rating | Category | Strategy Points | Notes |
|---|---|---|---|
| | Low | 1 | Exm/Exq/Exo/Exi/Exs/ExC |
| | Medium | 5 | Exd/Exp |
| | High | 10 | Exe/ExN |

| 8. Vibration | Category | Strategy Points | Notes |
|---|---|---|---|
| | Low | 1 | Secured to main structure/low vibration location |
| | Moderate | 5 | Rotating plant, actuated valves |
| | High | 15 | Turbines/Reciprocating engines |

| 9. UV Exposure (in Temp Cycling Field | Category | Strategy Points | Notes |
|---|---|---|---|
| | Benign | 1 | Inside |
| | Moderate | 1 | Outside (under cover) |
| | Severe | 5 | Outside (exposed to direct sunlight) |

| 10. Ambient Temperature | Category | Strategy Points | Notes |
|---|---|---|---|
| | Benign | 1 | Between -20 and 40 |
| | Moderate | 1 | N\A |
| | Severe | 5 | Less than -20 or greater than 40 |

| 11. Location Category | Category | Strategy Points | Notes |
|---|---|---|---|
| | Benign | 1 | Water injection/Water treatment/SRP module (water process)/Internal accommodation areas/Externally mounted equipment on accommodation walls |

(continued)

| 11. Location Category | Category | Strategy Points | Notes |
|---|---|---|---|
| | Moderate | 5 | Separation trains A & B/Separators/Treater/Pumps/Well service pump/-Chemical injection skid/Flare system/Flare Drums/Flare stack/Fuel gas system/Utilities/Power generation/LER/Forward electrical rooms/Laboratory/Lay-down areas/Cranes/Helideck/Main deck/Pire-racks |
| | Severe | 15 | Turret/Moonpool/Pump room/ Pump room ventilation exhaust area/Topside zone 1/High-pressure gas systems - compressors/Cargo systems |

Based upon the analysis of the RBI attributes, the system proposes a re-inspection date and grade as listed in Table 7:

Table 7

| Sequence | From | To | % Visual | %Close | % Detailed | Window |
|---|---|---|---|---|---|---|
| V5 | 0 | 10 | 100% | 0% | 0% | 36 |
| V4 | 11 | 18 | 100% | 0% | 0% | 36 |
| V3 | 19 | 23 | 100% | 0% | 0% | 36 |
| C3 | 24 | 47 | 0% | 100% | 0% | 36 |
| C2 | 48 | 100 | 0% | 90% | 10% | 36 |
| ME | 101 | 200 | 0% | 100% | 0% | 12 |
| F1 | 200 | 300 | 0% | 0% | 100% | 6 |

Where:

- V5 = a visual grade inspection. This is currently set at three years (36 months) but can be increased to five years (60 months).
- V4 = a visual grade inspection. This is currently set at three years (36 months) but can be increased to four years (48 months).
- V3 = a visual grade inspection. This is currently set at three years (36 months).
- C3 = a close grade inspection. This is currently set at three years (36 months).
- C2 = a close grade inspection (90% of equipment) plus a detailed grade inspection (10% of equipment). This is currently set at three years (36 months) but can be changed for two years (24 months) for the detailed grade inspections.
- ME = moveable equipment. This is set as a close grade inspection every one-year (12 months) as per the IEC recommendations.
- FI = frequently opened equipment. This is set as a detailed grade inspection every half-year (6 months) as per the IEC recommendations.

Example

Consider a simple fault on the Exd equipment, for instance missing cable identification. This type of fault may seem relatively unimportant. However, cable identification is required for correct isolation of the circuit before opening the equipment. Also, opening this type of equipment without isolation could expose the internal ignition-capable equipment to the hazardous environment. In the event of gas being present in that environment, an ignition source is introduced by opening the 'live' equipment to the gas.

According to previous (paper) inspection routines, no distinction was made between a missing cable identification in the 'Lay-down' area and 'Pump-room' on an FPSO. In each case the Ex inspector will record a 'fault'. Depending upon the experience of the Ex inspector and his interpretation of the seriousness of the fault he will record a fail and may (or may not) recommend a repair time. Different inspectors are likely to record different recommendations. Further, without experienced appraisal of the situation, there is no discrimination between the recommendations (if any) for the two locations, even though the pump room is a far more dangerous location, the likelihood is that any recommended repair time will be the same for both locations. It is further likely that the faults will be recorded as non-serious, despite the risk of any gas being present as mentioned above.

According to the system however, for the equipment in the 'Lay-down' area, the repair priority (RP) is calculated automatically based upon the formula: $RP = C + IR + Z + L + SL$ as mentioned above, wherein:

- In the criticality database, see as an example Table 1 above, the criticality score associated with inspection routine and the fault is retrieved. In this example, the criticality (C) of the fault is (now) medium = 2 points.
- The ignition risk score (IR) (see for instance Table 2) of the equipment is high, such that IR = 3 points.
- The equipment is installed in zone 2, such that (following Table 3) the hazardous zone score (Z) = 1 point.
- The primary location score (L) of the equipment is medium (FPSO specific - topside) = 2 points.
- The secondary location score (SL) is low (no nearby process dangers) = 1 point.

Therefore, the repair priority recorded for the Exd fault in the lay-down area will acquire the following points when the algorithm is applied:

$$RP = C + IR + Z + L + SL$$

$$RP = 2 + 3 + 1 + 2 + 1 = 9 \text{ points.}$$

From the configuration table (see Table 4), the repair priority in this case is RP3 (score between 7 and 11 points). The recommendation time for repair will be (based on Table 5) 120 days and mitigation is possibly needed in case of continued use before repair.

For the same type of fault in the 'Pump-room' area, the repair priority (RP) is again calculated automatically based upon the formula: $RP = C + IR + Z + L + SL$, wherein in this case:

- The criticality score (C) of the fault is again medium = 2 points:
- The ignition risk score (IR) of the equipment is again high = 3 points:
- The equipment is this time installed in zone 1, such that the hazardous zone score (Z) = 2 points:
- The primary location score (L) of the equipment is high (FPSO specific) = 3 points:
- The secondary location score (SL) is also high (nearby process dangers) = 3 points.

Therefore, the repair priority recorded for the Exd fault in the pump-room area will acquire the following points when the algorithm of the IEX configuration is applied:

$$RP = C + IR + Z + L + SL$$

$$RP = 2 + 3 + 2 + 3 + 3 = 13 \text{ points.}$$

From the configuration table (see Table 4), the repair priority in this case is RP2 (score between 12 and 13 points). The recommendation for repair (and mitigation in case of continued use before repair) will now be (based on Table 5) 60 days instead of 120 days as calculated above.

A person of skilled in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, flash drive, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "units", "processors" or "modules", may be provided through the use of dedicated hardware as well as hardware capable of executing software such as firmware in association with appropriate software. When provided by a processor, the functions may be provided by a single dedicated processor, by a single shared processor, or by a plurality of individual processors, some of which may be shared. Moreover, explicit use of the term "unit", "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The present invention is not limited to the embodiment shown, but extends also to other embodiments falling within the scope of the appended claims.

**Claims**

1. Method for repairing a plurality of processing devices (101-116) posing an ignition risk in a processing plant (100) on the basis of a repair priority list, wherein processing devices (101-116) having a higher repair priority are to be repaired first, wherein the method comprises defining the repair priority list for the plurality of processing devices (101-116) in the processing plant (100) by the computer implemented steps of:

   - defining for the plurality of processing devices (101-116) the repair priority parameter, and;
   - providing the repair priority list (149) on the basis of the defined plurality of repair priority parameters for each of the processing devices (101-116),

   wherein the step of defining a repair priority parameter for a processing device (101-116) in the processing plant (100) comprises the computer implemented steps of:

   - providing, in a server (120), a criticality database (141), wherein the criticality database (141) comprises for a plurality of processing devices (101-116) in said processing plant (100) at least one inspection routine, wherein each of the inspection routines has associated therewith a criticality score;
   - receiving in a server (120), from a user terminal (200), a result parameter associated with an inspection routine associated with said processing device (101-116), wherein the result parameter is indicative for a pass or a fail of said inspection routine;
   - retrieving, if said received result parameter is indicative for a fail, from said criticality database (141) the criticality score associated with said failed routine and said processing device (101-116); and
   - providing, in a server, an ignition risk database defining for the plurality of processing devices an ignition risk score, the ignition risk score being based on the operating voltage of the processing device;
   - retrieving from said server, the corresponding ignition risk score associated with said processing device, and;
   - defining said repair priority parameter for said processing device (101-116) based on the retrieved criticality score and the retrieved ignition score, whereby a higher operating voltage results in a higher ignition risk score and thus a higher repair priority parameter.

2. Method according to claim 1, wherein the method further comprises, prior to the step of receiving the result parameter, the steps of:

   - receiving in said server (120), from said user terminal (200), an identifier of a processing device (101-116);
   - retrieving, from said criticality database (141), at least one inspection routine associated with the processing device (101-116) associated with said identifier;
   - sending, to said user terminal (200), the retrieved inspection routine;
   - receiving, in said user terminal (200), said result parameter associated with said inspection routine.

3. Method according to claim 2, wherein the identifier comprises an RFID-tag associated with a processing device (101-116), wherein the method further comprises the step of scanning, with said user terminal (200), an RFID-tag associated with said processing device (101-116) and sending said scanned RFID-tag to said server.

4. Method according to claim 1, 2 or 3, further comprising the steps of, receiving from the user terminal (200), an operating voltage of the processing device (101-116), wherein the ignition risk score is retrieved based on the received operating voltage.

5. Method according to any of the preceding claims, further comprising the steps of:

   - providing, in a server (120), a hazardous zone database (143) defining a plurality of zones and a hazardous zone score associated therewith, wherein the plurality of processing devices (101-116) has associated therewith a hazardous zone and a corresponding hazardous zone score, wherein a zone is indicative of the frequency and time that a hazardous substance may exist in said zone in normal working conditions;
   - retrieving, from said server (120), the zone score associated with said processing (101-116) device, and;

- defining said repair priority parameter also on the basis of said retrieved hazardous zone score.

6.  Method according to any of the preceding claims, further comprising the steps of:

    - providing, in a server (120), a primary location risk database (144) defining a plurality of locations and a primary location score associated therewith, wherein the plurality of processing devices (101-116) has associated therewith a location and a corresponding primary location score;
    - retrieving, from said server (120), the corresponding primary location score associated with said processing device (101-116), and;
    - defining said repair priority parameter also on the basis of said retrieved primary location score;
    - providing, in a server (120), a secondary location risk database (145) defining for the plurality of processing devices (101-116) a secondary location score being indicative of the risk of neighbouring equipment;
    - retrieving, from said server (120), the corresponding secondary location score associated with said processing device (101-116), and;
    - defining said repair priority parameter also on the basis of said retrieved secondary location score.

7.  Method according to at least claims 1, 5 and 6, wherein the repair priority parameter is defined on the basis of the criticality score, ignition risk score, hazardous zone score, the primary location score and the secondary location score.

8.  Method according to any of the preceding claims, wherein the criticality database (141) comprises for a plurality of processing devices (101-116) a plurality of inspection routines, wherein each of the inspection routines has associated therewith a criticality score, wherein each of the inspection routines has preferably associated therewith an inspection grade parameter, wherein the inspection grade parameter is indicative for the depth of the inspection routine, wherein a higher inspection grade parameter reflects a greater depth of inspection, wherein a plurality of the processing devices (101-116) has associated therewith a plurality of inspection routines with different inspection grade parameters.

9.  Method according to any of the preceding claims, further comprising providing a risk database (148), wherein the risk database (148) comprises a plurality of risk based inspection parameters associated with a plurality of processing devices (101-116), wherein the risk based inspection parameter is indicative of the likely consequence of a failure of a processing device (101-116).

10. Method according to claim 8 or 9, wherein the risk based inspection parameter is based on at least one of:

    - at least one equipment parameter being indicative of the likely consequence of a failure of said processing device (101-116), wherein an equipment parameter defines at least two categories, wherein each category has associated therewith a risk score, wherein the risk based inspection parameter is determined on the basis of the combined risk scores of the respective equipment parameters;
    - a hazardous zone parameter as defined in claim 5;
    - an environmental parameter being indicative of the exposure to the environment, i.e. weather, deluge or sea spray, of the equipment;
    - a corrosion risk parameter being indicative of the risk of corrosion of said processing device (101-116);
    - a water exposure parameter being indicative of the exposure to water of the processing device (101-116);
    - an opening frequency parameter being indicative of the opening frequency of the processing device (101-116);
    - an ignition risk parameter being indicative of the operating voltage of the processing device (101-116), for instance according to claim1;
    - an equipment protection parameter being indicative of protective concept of the processing device (101-116);
    - a vibration parameter being indicative of the exposure to vibration of said processing device (101-116);
    - an UV exposure parameter being indicative of the exposure to UV light of said processing device (101-116);
    - a temperature parameter being indicative of the range of temperature exposed to said processing device (101-116);
    - a location parameter being indicative of the conditions of the location of the processing device (101-116).

11. Method according to at least claims 1, 2 and 8 any of the claims 9 - 10, wherein the step of retrieving the at least one inspection routine comprises selecting, on the basis of the risk based inspection parameter associated with a processing device (101-116), an inspection routine, wherein for a higher risk base inspection parameter, an inspection routine having a higher inspection grade parameter is selected.

**12.** Method according to any of the claims 9 - 11, further comprising the steps of:

- defining on the basis of the risk based inspection parameter for a processing device (101-116) an inspection interval, wherein an inspection interval for a higher risk based inspection parameter is shorter than for a lower risk based inspection parameter;
- recording, in a history database, the inspection dates of the respective processing devices (101-116);
- providing, on the basis of the defined inspection interval and the inspection dates of the processing devices (101-116), an inspection order list defining the processing devices (101-116) to be inspected;
- providing to a user terminal (200) the inspection order list and the selected inspection routines.

**13.** System comprising

- a server for storing at least one of the databases (141-149) according to one of the preceding claims;
- a processing means (150) configured to perform the operations according to any of the preceding claims, and;
- a communication unit (160) for communicating with at least one user terminal (200).

**14.** Floating hydrocarbon production plant provided with a system according to claim 13.

**Patentansprüche**

**1.** Verfahren zum Reparieren einer Vielzahl von Verarbeitungsvorrichtungen (101-116), die ein Zündrisiko in einer Verarbeitungsanlage (100) darstellt, auf der Basis einer Reparaturprioritätsliste, wobei Verarbeitungsvorrichtungen (101-116), die eine höhere Reparaturpriorität aufweisen, zuerst zu reparieren sind, wobei das Verfahren ein Definieren der Reparaturprioritätsliste für die Vielzahl von Verarbeitungsvorrichtungen (101-116) in der Verarbeitungsanlage (100) durch die computerimplementierten Schritte umfasst:

- Definieren des Reparaturprioritätsparameters für die Vielzahl von Verarbeitungsvorrichtungen (101-116) und;
- Bereitstellen der Reparaturprioritätsliste (149) auf der Basis der definierten Vielzahl von Reparaturprioritätsparametern für jede der Verarbeitungsvorrichtungen (101-116),

wobei der Schritt des Definierens eines Reparaturprioritätsparameters für eine Verarbeitungsvorrichtung (101-116) in der Verarbeitungsanlage (100) die computerimplementierten Schritte umfasst:

- Bereitstellen, in einem Server (120), einer Kritikalitätsdatenbank (141), wobei die Kritikalitätsdatenbank (141) für eine Vielzahl von Verarbeitungsvorrichtungen (101-116) in der Verarbeitungsanlage (100) mindestens eine Inspektionsroutine umfasst, wobei jede der Inspektionsroutinen eine Kritikalitätsbewertung dieser zugeordnet aufweist;
- Empfangen in einem Server (120), von einer Benutzerstation (200), eines Ergebnisparameters, der einer Inspektionsroutine zugeordnet ist, die der Verarbeitungsvorrichtung (101-116) zugeordnet ist, wobei der Ergebnisparameter ein Bestehen oder ein Nichtbestehen der Inspektionsroutine anzeigt;
- Abrufen, falls der empfangene Ergebnisparameter ein Nichtbestehen anzeigt, aus der Kritikalitätsdatenbank (141) der Kritikalitätsbewertung, die der nicht bestandenen Routine und der Verarbeitungsvorrichtung (101-116) zugeordnet ist; und
- Bereitstellen, in einem Server, einer Zündrisikodatenbank, die für die Vielzahl von Verarbeitungsvorrichtungen eine Zündrisikobewertung definiert, wobei die Zündrisikobewertung auf der Betriebsspannung der Verarbeitungsvorrichtung basiert;
- Abrufen von dem Server der entsprechenden Zündrisikobewertung, die der Verarbeitungsvorrichtung zugeordnet ist, und;
- Definieren des Reparaturprioritätsparameters für die Verarbeitungsvorrichtung (101-116) basierend auf der abgerufenen Kritikalitätsbewertung und der abgerufenen Zündbewertung, wobei eine höhere Betriebsspannung zu einer höheren Zündrisikobewertung und somit zu einem höheren Reparaturprioritätsparameter führt.

**2.** Verfahren nach Anspruch 1, wobei das Verfahren ferner, vor dem Schritt des Empfangens des Ergebnisparameters, die Schritte umfasst:

- Empfangen in dem Server (120), von der Benutzerstation (200), einer Kennung einer Verarbeitungsvorrichtung (101-116);

- Abrufen, aus der Kritikalitätsdatenbank (141), mindestens einer Inspektionsroutine, die der Verarbeitungsvorrichtung (101-116) zugeordnet ist, die der Kennung zugeordnet ist;
- Senden, an die Benutzerstation (200), der abgerufenen Inspektionsroutine;
- Empfangen, in der Benutzerstation (200), des Ergebnisparameters, der der Inspektionsroutine zugeordnet ist.

3.  Verfahren nach Anspruch 2, wobei die Kennung einen RFID-Tag umfasst, der einer Verarbeitungsvorrichtung (101-116) zugeordnet ist, wobei das Verfahren ferner den Schritt eines Scannens, mit der Benutzerstation (200), eines RFID-Tag, der der Verarbeitungsvorrichtung (101-116) zugeordnet ist, und des Sendens des gescannten RFID-Tag an den Server umfasst.

4.  Verfahren nach Anspruch 1, 2 oder 3, ferner umfassend die Schritte des Empfangens von der Benutzerstation (200) einer Betriebsspannung der Verarbeitungsvorrichtung (101-116), wobei die Zündrisikobewertung basierend auf der empfangenen Betriebsspannung abgerufen wird.

5.  Verfahren nach einem der vorstehenden Ansprüche, ferner umfassend die Schritte:

    - Bereitstellen, in einem Server (120), einer Gefahrenzonendatenbank (143), die eine Vielzahl von Zonen und eine Gefahrenzonenbewertung definiert, die dieser zugeordnet ist, wobei die Vielzahl von Verarbeitungsvorrichtungen (101-116) eine Gefahrenzone und eine entsprechende Gefahrenzonenbewertung dieser zugeordnet aufweist, wobei eine Zone die Frequenz und die Zeit anzeigt, dass eine gefährliche Substanz in der Zone unter normalen Arbeitsbedingungen vorhanden sein kann;
    - Abrufen, von dem Server (120), der Zonenbewertung, die der Verarbeitungs(101-116)-Vorrichtung zugeordnet ist, und;
    - Definieren des Reparaturprioritätsparameters ebenso auf der Basis der abgerufenen Gefahrenzonenbewertung.

6.  Verfahren nach einem der vorstehenden Ansprüche, ferner umfassend die Schritte:

    - Bereitstellen, in einem Server (120), einer primären Standortrisikodatenbank (144), die eine Vielzahl von Standorten und eine primäre Standortbewertung definiert, die dieser zugeordnet ist, wobei die Vielzahl von Verarbeitungsvorrichtungen (101-116) einen Standort und eine entsprechende primäre Standortbewertung dieser zugeordnet aufweist;
    - Abrufen, von dem Server (120), der entsprechenden primären Standortbewertung, die der Verarbeitungsvorrichtung (101-116) zugeordnet ist, und;
    - Definieren des Reparaturprioritätsparameters ebenso auf der Basis der abgerufenen primären Standortbewertung;
    - Bereitstellen, in einem Server (120), einer sekundären Standortrisikodatenbank (145), die für die Vielzahl von Verarbeitungsvorrichtungen (101-116) eine sekundäre Standortbewertung definiert, die das Risiko benachbarter Ausrüstung anzeigt;
    - Abrufen, von dem Server (120), der entsprechenden sekundären Standortbewertung, die der Verarbeitungsvorrichtung (101-116) zugeordnet ist, und;
    - Definieren des Reparaturprioritätsparameters ebenso auf der Basis der abgerufenen sekundären Standortbewertung.

7.  Verfahren nach mindestens den Ansprüchen 1, 5 und 6, wobei der Reparaturprioritätsparameter auf der Basis der Kritikalitätsbewertung, der Zündrisikobewertung, der Gefahrenzonenbewertung, der primären Standortbewertung und der sekundären Standortbewertung definiert wird.

8.  Verfahren nach einem der vorstehenden Ansprüche, wobei die Kritikalitätsdatenbank (141) für eine Vielzahl von Verarbeitungsvorrichtungen (101-116) eine Vielzahl von Inspektionsroutinen umfasst, wobei jede der Inspektionsroutinen eine Kritikalitätsbewertung dieser zugeordnet aufweist, wobei jede der Inspektionsroutinen vorzugsweise einen Inspektionsgradparameter dieser zugeordnet aufweist, wobei der Inspektionsgradparameter die Tiefe der Inspektionsroutine anzeigt, wobei ein höherer Inspektionsgradparameter eine größere Inspektionstiefe widerspiegelt, wobei eine Vielzahl der Verarbeitungsvorrichtungen (101-116) eine Vielzahl von Inspektionsroutinen mit unterschiedlichen Inspektionsgradparametern dieser zugeordnet aufweist.

9.  Verfahren nach einem der vorstehenden Ansprüche, ferner umfassend das Bereitstellen einer Risikodatenbank (148), wobei die Risikodatenbank (148) eine Vielzahl von risikobasierten Inspektionsparametern umfasst, die einer Vielzahl von Verarbeitungsvorrichtungen (101-116) zugeordnet ist, wobei der risikobasierte Inspektionsparameter die wahrscheinliche Konsequenz eines Ausfalls einer Verarbeitungsvorrichtung (101-116) anzeigt.

10. Verfahren nach Anspruch 8 oder 9, wobei der risikobasierte Inspektionsparameter auf mindestens einem basiert von:

- mindestens einem Ausrüstungsparameter, der die wahrscheinliche Konsequenz eines Ausfalls der Verarbeitungsvorrichtung (101-116) anzeigt, wobei ein Ausrüstungsparameter mindestens zwei Kategorien definiert, wobei jede Kategorie eine Risikobewertung dieser zugeordnet aufweist, wobei der risikobasierte Inspektionsparameter auf der Basis der kombinierten Risikobewertungen der jeweiligen Ausrüstungsparameter bestimmt wird;
- einem Gefahrenzonenparameter wie in Anspruch 5 definiert;
- einem Umweltparameter, der die Exposition der Ausrüstung gegenüber der Umwelt, d. h. Wetter, Überschwemmung oder Gischt, anzeigt;
- einem Korrosionsrisikoparameter, der das Korrosionsrisiko der Verarbeitungsvorrichtung (101-116) anzeigt;
- einem Wasserexpositionsparameter, der die Wasserexposition der Verarbeitungsvorrichtung (101-116) anzeigt;
- einem Öffnungsfrequenzparameter, der die Öffnungsfrequenz der Verarbeitungsvorrichtung (101-116) anzeigt;
- einem Zündrisikoparameter, der die Betriebsspannung der Verarbeitungsvorrichtung (101-116) anzeigt, beispielsweise nach Anspruch 1;
- einem Ausrüstungsschutzparameter, der ein Schutzkonzept der Verarbeitungsvorrichtung (101-116) anzeigt;
- einem Vibrationsparameter, der die Vibrationsexposition der Verarbeitungsvorrichtung (101-116) anzeigt;
- einem UV-Expositionsparameter, der die UV-Licht-Exposition der Verarbeitungsvorrichtung (101-116) anzeigt;
- einem Temperaturparameter, der den Temperaturbereich anzeigt, dem die Verarbeitungsvorrichtung (101-116) exponiert ist;
- einem Standortparameter, der die Bedingungen des Standorts der Verarbeitungsvorrichtung (101-116) anzeigt.

11. Verfahren nach mindestens den Ansprüchen 1, 2 und 8 einem der Ansprüche 9 bis 10, wobei der Schritt des Abrufens der mindestens einen Inspektionsroutine das Auswählen, auf der Basis des risikobasierten Inspektionsparameters, der einer Verarbeitungsvorrichtung (101-116) zugeordnet ist, einer Inspektionsroutine umfasst, wobei für einen höheren risikobasierten Inspektionsparameter eine Inspektionsroutine ausgewählt wird, die einen höheren Inspektionsgradparameter aufweist.

12. Verfahren nach einem der Ansprüche 9 bis 11, ferner umfassend die Schritte:

- Definieren eines Inspektionsintervalls auf der Basis des risikobasierten Inspektionsparameters für eine Verarbeitungsvorrichtung (101-116), wobei ein Inspektionsintervall für einen höheren risikobasierten Inspektionsparameter kürzer als für einen niedrigeren risikobasierten Inspektionsparameter ist;
- Aufzeichnen, in einer Verlaufsdatenbank, der Inspektionsdaten der jeweiligen Verarbeitungsvorrichtungen (101-116);
- Bereitstellen, auf der Basis des definierten Inspektionsintervalls und der Inspektionsdaten der Verarbeitungsvorrichtungen (101-116), einer Inspektionsauftragsliste, die die zu inspizierenden Verarbeitungsvorrichtungen (101-116) definiert;
- Bereitstellen der Inspektionsauftragsliste und der ausgewählten Inspektionsroutinen an eine Benutzerstation (200).

13. System, umfassend

- einen Server zum Speichern mindestens einer der Datenbanken (141-149) nach einem der vorstehenden Ansprüche;
- ein Verarbeitungsmittel (150), das konfiguriert ist, um die Vorgänge nach einem der vorstehenden Ansprüche durchzuführen, und;
- eine Kommunikationseinheit (160) zum Kommunizieren mit mindestens einer Benutzerstation (200).

14. Schwimmende Kohlenwasserstoffproduktionsanlage, die mit einem System nach Anspruch 13 versehen ist.

**Revendications**

1. Procédé de réparation d'une pluralité de dispositifs de traitement (101 à 116) présentant un risque d'ignition dans une usine de traitement (100) sur la base d'une liste de priorités de réparation, dans lequel les dispositifs de traitement (101 à 116) ayant une priorité de réparation plus élevée doivent être réparés en premier, dans lequel le procédé comprend la définition de la liste de priorités de réparation pour la pluralité de dispositifs de traitement (101 à 116) dans l'usine de traitement (100) par les étapes mises en œuvre par ordinateur consistant à :

   - définir pour la pluralité de dispositifs de traitement (101 à 116) le paramètre de priorité de réparation, et ;
   - fournir la liste de priorités de réparation (149) sur la base de la pluralité définie de paramètres de priorité de réparation pour chacun des dispositifs de traitement (101 à 116),

   dans lequel l'étape consistant à définir un paramètre de priorité de réparation pour un dispositif de traitement (101 à 116) dans l'usine de traitement (100) comprend les étapes mises en œuvre par ordinateur consistant à :

   - fournir, dans un serveur (120), une base de données de criticité (141), dans lequel la base de données de criticité (141) comprend, pour une pluralité de dispositifs de traitement (101 à 116) dans ladite usine de traitement (100), au moins une routine d'inspection, dans lequel chacune des routines d'inspection est associée à un score de criticité ;
   - recevoir dans un serveur (120), en provenance d'un terminal utilisateur (200), un paramètre de résultat associé à une routine d'inspection associée audit dispositif de traitement (101 à 116), dans lequel le paramètre de résultat indique une réussite ou un échec de ladite routine d'inspection ;
   - récupérer, si ledit paramètre de résultat reçu indique un échec, à partir de ladite base de données de criticité (141), le score de criticité associé à ladite routine ayant échoué et audit dispositif de traitement (101 à 116) ; et
   - fournir, dans un serveur, une base de données de risques d'ignition définissant pour la pluralité de dispositifs de traitement un score de risque d'ignition, le score de risque d'ignition étant en fonction de la tension de fonctionnement du dispositif de traitement ;
   - récupérer, à partir dudit serveur, le score de risque d'ignition correspondant associé audit dispositif de traitement, et ;
   - définir ledit paramètre de priorité de réparation pour ledit dispositif de traitement (101 à 116) en fonction du score de criticité récupéré et du score d'ignition récupéré, selon lequel une tension de fonctionnement plus élevée entraîne un score de risque d'ignition plus élevée et donc un paramètre de priorité de réparation plus élevé.

2. Procédé selon la revendication 1, dans lequel le procédé comprend en outre, avant l'étape de réception du paramètre de résultat, les étapes consistant à :

   - recevoir dans ledit serveur (120), en provenance dudit terminal utilisateur (200), un identifiant d'un dispositif de traitement (101 à 116) ;
   - récupérer, à partir de ladite base de données de criticité (141), au moins une routine d'inspection associée au dispositif de traitement (101 à 116) associé audit identifiant ;
   - envoyer, audit terminal utilisateur (200), la routine d'inspection récupérée ;
   - recevoir, dans ledit terminal utilisateur (200), ledit paramètre de résultat associé à ladite routine d'inspection.

3. Procédé selon la revendication 2, dans lequel l'identifiant comprend une étiquette RFID associée à un dispositif de traitement (101 à 116), dans lequel le procédé comprend en outre l'étape consistant à balayer, avec ledit terminal utilisateur (200), une étiquette RFID associée audit dispositif de traitement (101 à 116) et à envoyer ladite étiquette RFID balayée audit serveur.

4. Procédé selon la revendication 1, 2 ou 3, comprenant en outre les étapes consistant à recevoir en provenance du terminal utilisateur (200) une tension de fonctionnement du dispositif de traitement (101 à 116), dans lequel le score de risque d'ignition est récupéré en fonction de la tension de fonctionnement reçue.

5. Procédé selon l'une quelconque des revendications précédentes, comprenant en outre les étapes consistant à :

   - fournir, dans un serveur (120), une base de données de zones dangereuses (143) définissant une pluralité de zones et un score de zone dangereuse associé à celle-ci, dans lequel la pluralité de dispositifs de traitement (101 à 116) est associée à une zone dangereuse et a un score de zone dangereuse correspondant, dans lequel une zone indique la fréquence et la durée pendant lesquelles une substance dangereuse peut se trouver dans ladite zone dans des conditions de travail normales ;
- récupérer, à partir dudit serveur (120), le score de zone associé audit dispositif de traitement (101 à 116), et ;
- définir ledit paramètre de priorité de réparation également en fonction dudit score de zone dangereuse récupéré.

6. Procédé selon l'une quelconque des revendications précédentes, comprenant en outre les étapes consistant à :

- fournir, dans un serveur (120), une base de données de risques d'emplacement primaire (144) définissant une pluralité d'emplacements et un score d'emplacement primaire associé à celle-ci, dans lequel la pluralité de dispositifs de traitement (101 à 116) est associée à un emplacement et a un score d'emplacement primaire correspondant ;
- récupérer, à partir dudit serveur (120), le score d'emplacement primaire correspondant associé audit dispositif de traitement (101 à 116), et ;
- définir ledit paramètre de priorité de réparation également en fonction dudit score d'emplacement primaire récupéré ;
- fournir, dans un serveur (120), une base de données de risques d'emplacement secondaire (145) définissant pour la pluralité de dispositifs de traitement (101 à 116) un score d'emplacement secondaire indiquant le risque d'un équipement voisin ;
- récupérer, en provenance dudit serveur (120), le score d'emplacement secondaire correspondant associé audit dispositif de traitement (101 à 116), et ;
- définir ledit paramètre de priorité de réparation également en fonction dudit score d'emplacement secondaire récupéré.

7. Procédé selon au moins les revendications 1, 5 et 6, dans lequel le paramètre de priorité de réparation est défini en fonction du score de criticité, du score de risque d'ignition, du score de zone dangereuse, du score d'emplacement primaire et du score d'emplacement secondaire.

8. Procédé selon l'une quelconque des revendications précédentes, dans lequel la base de données de criticité (141) comprend pour une pluralité de dispositifs de traitement (101 à 116) une pluralité de routines d'inspection, dans lequel chacune des routines d'inspection est associée à un score de criticité, dans lequel chacune des routines d'inspection est de préférence associée à un paramètre de niveau d'inspection, dans lequel le paramètre de niveau d'inspection indique la profondeur de la routine d'inspection, dans lequel un paramètre de niveau d'inspection plus élevée reflète une profondeur d'inspection supérieure, dans lequel une pluralité des dispositifs de traitement (101 à 116) est associée à une pluralité de routines d'inspection avec différents paramètres de niveau d'inspection.

9. Procédé selon l'une quelconque des revendications précédentes, comprenant en outre la fourniture d'une base de données de risques (148), dans lequel la base de données de risques (148) comprend une pluralité de paramètres d'inspection basés sur les risques associés à une pluralité de dispositifs de traitement (101 à 116), dans lequel le paramètre d'inspection basé sur les risques indique la conséquence probable d'une défaillance d'un dispositif de traitement (101 à 116).

10. Procédé selon la revendication 8 ou 9, dans lequel le paramètre d'inspection basé sur les risques est au moins en fonction d'un élément parmi :

- au moins un paramètre d'équipement indiquant la conséquence probable d'une défaillance dudit dispositif de traitement (101 à 116), dans lequel un paramètre d'équipement définit au moins deux catégories, dans lequel chaque catégorie est associée à un score de risque, dans lequel le paramètre d'inspection basé sur les risques est déterminé sur la base des scores de risques combinés des paramètres d'équipement respectifs ;
- un paramètre de zone dangereuse tel que défini dans la revendication 5 ;
- un paramètre environnemental indiquant l'exposition de l'équipement à l'environnement, c'est-à-dire aux conditions météorologiques, à un déluge ou aux embruns marins ;
- un paramètre de risque de corrosion indiquant le risque de corrosion dudit dispositif de traitement (101 à 116) ;
- un paramètre d'exposition à l'eau indiquant l'exposition à l'eau du dispositif de traitement (101 à 116) ;
- un paramètre de fréquence d'ouverture indiquant la fréquence d'ouverture du dispositif de traitement (101 à 116) ;
- un paramètre de risque d'ignition indiquant la tension de fonctionnement du dispositif de traitement (101 à 116), par exemple selon la revendication 1 ;
- un paramètre de protection d'équipement indiquant un concept de protection du dispositif de traitement (101 à 116) ;

- un paramètre de vibrations indiquant l'exposition aux vibrations dudit dispositif de traitement (101 à 116) ;
- un paramètre d'exposition aux UV indiquant l'exposition à la lumière UV dudit dispositif de traitement (101 à 116) ;
- un paramètre de température indiquant la plage de température à laquelle est exposé ledit dispositif de traitement (101 à 116) ;
- un paramètre d'emplacement indiquant les conditions de l'emplacement du dispositif de traitement (101 à 116).

11. Procédé selon au moins les revendications 1, 2 et 8 selon l'une quelconque des revendications 9 et 10, dans lequel l'étape de récupération de l'au moins une routine d'inspection consiste à choisir, sur la base du paramètre d'inspection basé sur les risques associé à un dispositif de traitement (101 à 116), une routine d'inspection, dans lequel pour un paramètre d'inspection basé sur les risques plus élevés, une routine d'inspection ayant un paramètre de niveau d'inspection plus élevé est choisie.

12. Procédé selon l'une quelconque des revendications 9 à 11, comprenant en outre les étapes consistant à :

- définir sur la base du paramètre d'inspection basé sur les risques pour un dispositif de traitement (101 à 116) un intervalle d'inspection, dans lequel un intervalle d'inspection pour un paramètre d'inspection basé sur les risques plus élevés est plus court que pour un paramètre d'inspection basé sur les risques plus faibles ;
- enregistrer, dans une base de données historique, les dates d'inspection des dispositifs de traitement (101 à 116) respectifs ;
- fournir, sur la base de l'intervalle d'inspection défini et des dates d'inspection des dispositifs de traitement (101 à 116), une liste d'ordres d'inspection définissant les dispositifs de traitement (101 à 116) à inspecter ;
- fournir à un terminal utilisateur (200) la liste d'ordres d'inspection et les routines d'inspection choisies.

13. Système comprenant

- un serveur pour stocker au moins l'une des bases de données (141 à 149) selon l'une des revendications précédentes ;
- un moyen de traitement (150) configuré pour effectuer les opérations selon l'une quelconque des revendications précédentes, et ;
- une unité de communication (160) pour communiquer avec au moins un terminal utilisateur (200).

14. Usine flottante de production d'hydrocarbures équipée d'un système selon la revendication 13.

FIG. 1

FIG. 2

EP 4 139 863 B1

FIG. 3

FIG. 4

141

| # | IR | S | IG |
|------|-----------------|-----|-----|
| 101k | $IR_1$ | 5 | 3 |
| 101k | $IR_2$ | 2 | 2 |
| 101k | $IR_3$ | 1 | 2 |
| . . . | . . . | . . . | . . . |

## FIG. 5A

| # | RP |
|------|-----|
| 101k | 5 |
| . | . |
| . | . |
| . | . |

149

## FIG. 5B

FIG. 6

143b

| PS | Z |
|----|---|
| 101 | 1 |
| 102 | 3 |
| 103 | 2 |
| ⋮ | ⋮ |

## FIG. 7A

| # | RBI |
|------|-----|
| 101k | 70 |
| 101l | 54 |
| 101g | 32 |
| 106a | 2 |
| ⋮ | ⋮ |

148

## FIG. 7B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0180043 A2
- WO 2012155194 A1
- US 2014358601 A1
- WO 2019197830 A1
- US 9672486 B1